# EUROPÄISCHE PATENTSCHRIFT

(11) **EP 0 952 649 B1**
(45) Veröffentlichungstag und Bekanntmachung des Hinweises auf die Patenterteilung: **05.04.2006**
(21) Anmeldenummer: 99104634.3
(22) Anmeldetag: 09.03.1999
(51) Int. Cl.: H02B 1/32

(54) **Schaltschrank mit einem Innen-Gehäuse zur HF-Abschirmung**
Switchgear cabinet with inner casing for HF shielding
Armoire de distribution avec boîtier intérieur pour blindage HF

(30) Priorität: 20.04.1998 DE 19817386
(43) Veröffentlichungstag der Anmeldung: 27.10.1999
(73) Patentinhaber: Rittal-Werk Rudolf Loh GmbH & Co. KG, 35745 Herborn (DE)
(72) Erfinder: Hemann, Dirk, 35753 Grelfenstein (DE)
(74) Vertreter: Fleck, Hermann-Joseph

(56) Entgegenhaltungen:
- DE-C- 3 611 693
- DE-U- 9 209 519

## Beschreibung

Die Erfindung betrifft einen Schaltschrank mit einem Rahmengestell, das vier vertikale Rahmenprofile aufweist, wobei an das Rahmengestell ein im Innenraum des Schaltschrankes angeordnetes Innen-Gehäuse angekoppelt ist, das zwei vertikale Seitenwände und eine obere und eine untere horizontale Abdeckung aufweist.

Ein solcher Schaltschrank ist aus der DE 36 11 693 C1 bekannt. Zur HF-Abschirmung ist in dem von dem Rahmengestell umschlossenen Innenraum ein kastenförmiges Innen-Gehäuse eingebracht. Dieses Innengehäuse besitzt zwei vertikale Seitenwände, die mit den beiden horizontalen Abdeckungen fest verbunden sind. Die so vormontierte Einheit kann durch die offene Frontseite des Rahmengestelles in den Schaltschrankinnenraum eingeführt und an dem Rahmengestell befestigt werden. Im eingebauten Zustand fallen die Vorder- und die Rückseite des Rahmengestelles mit den entsprechenden offenen Seiten des Innengehäuses zusammen. Der Schaltschrank hat eine vordere und eine hintere Schranktür, die im geschossenen Zustand die offenen Seiten des Innengehäuses überdecken.

Es ist Aufgabe der Erfindung, einen Schaltschrank der eingangs erwähnten Art zu schaffen, bei dem sich das Innen-Gehäuse auf einfache Weise im Innenraum des Schaltschrankes installieren läßt.

Diese Aufgabe der Erfindung wird dadurch gelöst, daß die vertikalen Seitenwände an den vertikalen Rahmenprofilen befestigt sind und jeweils mit einer oberen und einer unteren Längsführung versehen sind, die in Richtung der Schranktiefe verlaufen, und daß die Abdeckungen über die offene Frontseite des Rahmengestelles mit Führungselementen in die Längsführungen einschiebbar und an diesen gehalten sind.

Zur Montage des Innen-Gehäuses werden zunächst die Seitenwände an den vertikalen Rahmenprofilen befestigt. Anschließend können die Abdeckungen in die Längsführungen eingeschoben werden. Die einzelnen Bauteile des Innen-Gehäuses lassen sich einfach handhaben, so daß die Montage von einer einzigen Person durchgeführt werden kann.

Eine bevorzugte Ausgestaltungsvariante der Erfindung sieht vor, daß die Seitenwände mit in Richtung zum Innenraum des Rahmengestelles gerichteten Abkantungen versehen sind, die an ihren freien Enden U-förmig zurückgebogen sind, um die Längsführungen zu bilden, daß die Abdeckungen an ihren horizontalen, in Richtung der Schranktiefe verlaufenden Kanten mit den ebenfalls als U-förmigen Einbiegungen ausgebildeten Führungselementen versehen sind, und daß die U-förmigen Einbiegungen der Abdeckungen und der Seitenwände im montierten Zustand ineinander gehakt sind. Bei diesem Innengehäuse ist die Verbindungsmechanik zwischen den Seitenwänden und den Abdeckungen auf einfachste Weise realisiert. Bei einem erfindungsgemäßen Schaltschrank kann es vorgesehen sein, daß wenigstens eine der Abdeckungen zumindest zwei Teilplatten aufweist, die hintereinanderliegend in den Längsführungen gehalten sind, und in den Trennbereich zwischen den beiden Teilplatten eine Kabeldurchführung angeordnet ist. Zur Kabeleinführung können die beiden Teilplatten in den Längsführungen auseinandergezogen werden. Wenn die Kabel in das Innen-Gehäuse eingeführt sind, werden die beiden Teilplatten wieder gegeneinander geschoben und die Kabeldurchführung so geschlossen. Dabei kann es insbesondere vorgesehen sein, die Teilplatten an ihrem der Kabeldurchführung zugekehrten Rand mit Abkantungen versehen sind, auf die in Breitenrichtung des Rahmengestelles verlaufende Dichtungen aufgebracht sind. Die Dichtungen liegen so dicht um den Außenumfang der Kabel herum. Damit läßt sich eine HF-dichte Abschirmung der Kabeldurchführung erreichen.

Im Innen-Gehäuse können wärmeentwicklende Einbauten untergebracht sein. Damit die entstandene Wärme abtransportiert werden kann, ist es denkbar, daß die Abdeckungen mit einem Lochraster versehen sind, durch die hindurch ein Lüftungsstrom hindurchtreten kann. Die Geometrie der einzelnen Löcher ist dabei so gewählt, daß eine HF-dichte Abschirmung des Innen-Gehäuses gewährleistet bleibt.

Das Innen-Gehäuse kann rückseitig mittels einer Rückwand verschlossen sein, die an die zugeordneten vertikalen Rahmenprofile angeschraubt ist. Die Rückwand kann auch mit einer Kabeldurchführung versehen sein. Frontseitig läßt sich das Innengehäuse beispielsweise mit einer Verschlußplatte abdecken. Diese kann bevorzugterweise mit einer Halterung ausgerüstet sein, die mit einem

Ansatz in eine Hinterschneidung der oberen oder der unteren Abdeckung einhakt. Zur Sicherung der Verschlußplatte sind Schließungen vorgesehen, die am Innengehäuse oder am Rahmengestell verriegelbar sind. Um auf einfache Weise Einbauten im Innenraum des Innen-Gehäuses festlegen zu können, ist ein erfindungsgemäßer Schaltschrank dadurch gekennzeichnet, daß in den Eckbereichen des Innengehäuses vertikal verlaufende Montageschienen an die vertikalen Rahmenprofile angekoppelt sind. Die vertikalen Montageschienen können mit Befestigungsaufnahmen versehen sein. An diesen lassen sich die elektrischen Einbauten oder entsprechende Halterungen festschrauben.

Die Erfindung wird im Folgenden anhand eines in den Zeichnungen dargestellten Ausführungsbeispieles näher erläutert. Es zeigen:
- Fig. 1: in perspektivischer Darstellung vier vertikale Rahmenprofile eines Rahmengestelles und ein zwischen den Rahmenprofilen eingebautes Innen-Gehäuse,
- Fig. 2: eine Detailansicht aus der Fig. 1 in vergrößerter Darstellung und

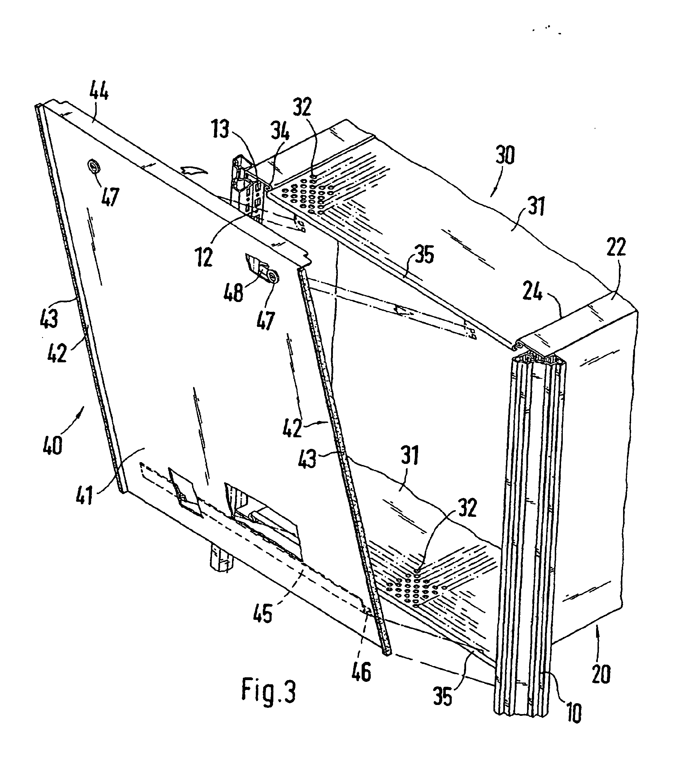

- Fig. 3: das Innengehäuse gem. Fig. 1 mit einer Verschlußplatte.

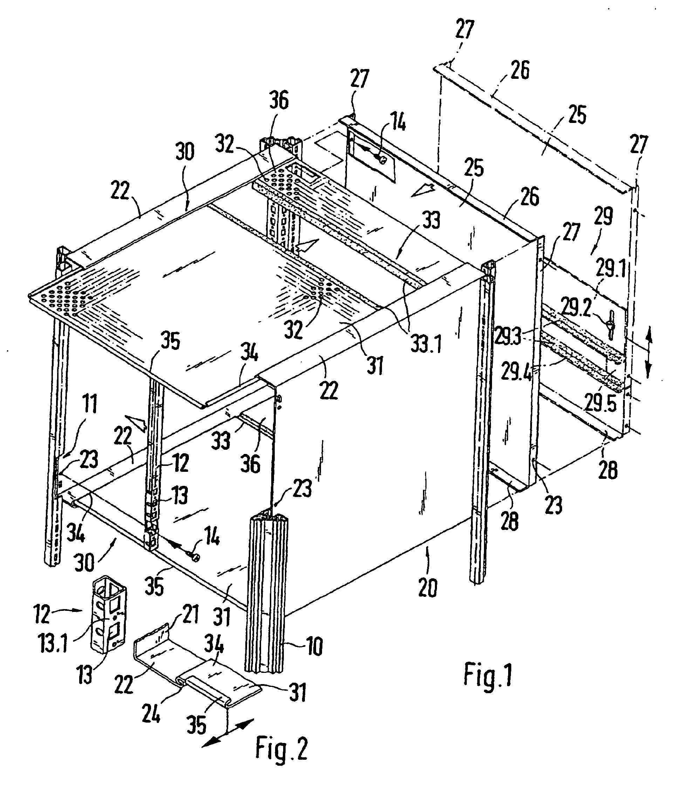

In der Fig. 1 sind vier Abschnitte von vertikalen Rahmenprofilen 10 eines Rahmengestelles dargestellt. An den vertikalen Rahmenprofilen 10 kann ein Innen-Gehäuse festgemacht werden. Das Innen-Gehäuse besitzt zwei vertikale Seitenwände 20, die an ihren vertikalen Rändern mit Bohrungen 23 versehen sind. Über diese Bohrungen 23 können die Seitenwände 20 an die zugeordneten vertikalen Rahmenprofile 10 angeschraubt werden. Von den horizontalen Rändern der Seitenwand 20 sind Abkantungen 22 horizontal abgewinkelt. Die Abkantungen 22 sind an ihren freien Rändern U-förmig eingerollt und bilden Längsführungen 24. Die Ausbildung dieser Längsführungen 24 läßt sich im Einzelnen der Fig. 2 entnehmen, die einen Teilbereich des Innengehäuses in vergrößerter Detaildarstellung zeigt. Zwischen den beiden Seitenwänden 20 können Abdeckungen 30 in die Längsführungen 24 eingeschoben werden. Die Abdeckungen 30 sind mit einem Lochraster 32 ausgestattet, das sich großflächig erstreckt. Die in Richtung der Tiefe des Rahmengestelles verlaufenden Ränder der Abdeckungen 30 sind U-förmig abgebogen und bilden so Führungselemente 34. Wie Fig. 2 zeigt, kann die Abdeckung 30 über die offene Frontseite des Rahmengestelles mit ihren Führungselementen 34 in die Längsführungen 24 der Seitenwände 20 eingeschoben werden. Die Abdeckungen 30 sind frontseitig abgebogen, so daß sich Hinterschneidungen 35 ergeben. Die Hinterschneidungen 35 sind zum Innenraum des Innen-Gehäuses hin gerichtet. Um Kabeldurchführungen 33 ausbilden zu können, sind die Abdeckungen 30 zweiteilig aus zwei Teilplatten 31, 36 gebildet. Die beiden Teilplatten 31, 36 sind hintereinanderliegend in die Längsführungen 24 eingeschoben. An ihrem der Kabeldurchführung 33 zugekehrten Bereich sind die Teilplatten 31, 36 mit einer Abkantung versehen. Auf diese sind Dichtungen 33.1 (Schaumstoffdichtungen) aufgeklebt. Zur Kabeleinführung werden die beiden Teilplatten 31, 36 auseinandergezogen. Die Kabel können dann einfach in das Innen-Gehäuse eingeführt werden. Anschließend werden die beiden Teilplatten 31, 36 gegeneinandergeschoben. Dann legen sich die Dichtungen 33.1 um die Außenkontur der eingeführten Kabel. Rückseitig kann das Innen-Gehäuse mit einer Rückwand 25 verschlossen werden. Die Rückwand 25 ist aus einem flächigen Stahlblechzuschnitt gefertigt. Sie weist an ihren beiden horizontalen Rändern Ansätze 26, 28 auf. Diese Ansätze 26, 28 übergreifen die Teilplatten 36 der Abdeckung 30 und bilden einen HF-dichten Abschluß. An ihren vertikalen Rändern sind von der Rückwand 25 Befestigungsabschnitte 27 abgebogen. Mit den Befestigungsabschnitten 27 kann die Rückwand 25 an den vertikalen Rahmenprofilen 10 festgeschraubt werden. Hierzu sind die Befestigungsabschnitte 27 mit Bohrungen 23 ausgerüstet. Durch diese Bohrungen 23 können Befestigungsschrauben 14 eingeführt und in entsprechend ausgebildete Gewindeaufnahmen der vertikalen Rahmenprofile eingeschraubt werden. Wie die Fig. 1 veranschaulicht, können unterschiedliche Rückwände 25 an dem Innengehäuse festgemacht werden. In gestrichelter Darstellung ist eine Rückwand 25 gezeigt, die mit einer Kabeldurchführung 29 ausgerüstet ist. Hierzu ist die Rückwand 25 wiederum zweigeteilt. Das untere Rückwandteil 25 weist eine horizontale Abkantung 29.4 auf, auf die eine Schaumstoffdichtung 29.3 aufgeklebt ist. Auf dem oberen Rückwandteil 25 ist eine Stelleinheit 29.1 an Längsführungen 29.2 festgemacht. Zum Öffnen und Schließen der Kabeldurchführung 29 kann die Stelleinheit 29.1 in vertikaler Richtung verschoben werden.

Um Einbauten im Innenraum des Innen-Gehäuses festlegen zu können, sind vertikale Montageschienen 12 verwendet. Diese Montageschienen 12 können in den Eckbereichen des Innen-Gehäuses aufgestellt werden. Hierzu weisen die vertikalen Rahmenprofile 10 eine Innenaufnahme 11 auf, in die die Montageschienen 12 eingesetzt werden. Zur Befestigung der Montageschienen 12 werden Befestigungsschrauben 14 verwendet, die in die Befestigungsaufnahmen der vertikalen Rahmenprofile 10 eingeschraubt sind. Wie sich aus Fig. 2 entnehmen läßt, besitzen die Montageschienen 12 zwei durch Winkel zueinanderstehende Profilseiten 13.1, die zum Innenraum des Innen-Gehäuses gerichtet sind und rechtwinklig zu den zugekehrten Außenseiten des Rahmengestelles stehen. In diese Profilseiten 13.1 sind Reihen von im Teilungsraster zueinander beabstandeter Befestigungsaufnahmen 13 eingebracht. Mit den Befestigungsaufnahmen 13 wird im Innenraum des Innengehäuses ein räumliches Befestigungsraster realisiert, an dem elektrische Einbauten direkt oder über Halterungen angebaut werden können.

Das Innen-Gehäuse kann frontseitig mit einer Verschlußplatte 40 verschlossen werden. Die Verschlußplatte 40 besitzt eine ebene Wand 41, die an ihren vertikalen Rändern mit Dichtstegen 42 versehen ist. Auf die Dichtstege 42 sind HF-Dichtungen 43 aufgebracht. Diese lassen sich mit Dichtkanten oder Dichtstegen des vertikalen Rahmenprofiles 10 in Anlage bringen. Der obere horizontale Rand der Wand 41 ist mit einer Abkantung 44 versehen, die auf der Teilplatte 31 der oberen Abdeckung 30 aufliegt. Im Bereich des unteren horizontalen Randes weist die Verschlußplatte 40 eine Halterung 45 auf, die mit einem Ansatz 46 versehen ist. Der Ansatz 46 greift hinter die Hinterschneidung 35. Hierdurch wird eine scharnierartige Verbindung zwischen der unteren Abdeckung 30 und der Verschlußplatte 40 gebildet. Wenn die Verschlußplatte 40 eingehakt ist, kann sie in die vertikale Montageposition gekippt werden. Zur Verriegelung der Verschlußplatte 40 sind zwei Schließungen 47 vorgesehen. Diese Schließungen 47 sind mit Vorreibern 48 ausgestattet. Die Vorreiber 48 lassen sich hinter die Hinterschneidungen 35 der Teilplatte 31 der oberen Abdeckung 30 drehen.

## Patentansprüche

1. Schaltschrank mit einem Rahmengestell, das vier vertikale Rahmenprofile (10) aufweist, wobei an das Rahmengestell ein im Innenraum des Schaltschrankes angeordnetes Innen-Gehäuse angekoppelt ist, das zwei vertikale Seitenwände (20) und eine obere und eine untere horizontale Abdeckung (30) aufweist,
**dadurch gekennzeichnet,**
**daß** die vertikalen Seitenwände (20) an den vertikalen Rahmenprofilen (10) befestigt sind und jeweils mit einer oberen und einer unteren Längsführung (24) versehen sind, die in Richtung der Schranktiefe verlaufen, und
**daß** die Abdeckungen (30) über die offene Frontseite des Rahmengestelles mit Führungselementen (34) in die Längsführungen (24) einschiebbar und an diesen gehalten sind.

2. Schaltschrank nach Anspruch 1,
**dadurch gekennzeichnet,**
**daß** die Seitenwände mit in Richtung zum Innenraum des Rahmengesteiles gerichteten Abkantungen (22) versehen sind, die an ihren freien Enden U-förmig zurückgebogen sind, um die Längsführungen (34) zu bilden,
**daß** die Abdeckungen (30) an ihren horizontalen, in Richtung der Schranktiefe verlaufenden Kanten mit den ebenfalls als U-förmigen Einbiegungen ausgebildten Führungselementen (34) versehen sind, und daß die U-förmigen Einbiegungen der Abdeckungen (30) und der Seitenwände (20) im montierten Zustand ineinander gehakt sind.

3. Schaltschrank nach Anspruch 1 oder 2,
**dadurch gekennzeichnet,**
**daß** wenigstens eine der Abdeckungen (30) zumindest zwei Teilplatten (31, 36) aufweist, die hintereinanderliegend in den Längsführungen (34) gehalten sind, und
**daß** in den Trennbereich zwischen den beiden Teilplatten (31, 36) eine Kabeldurchführung (33) angeordnet ist.

4. Schaltschrank nach Anspruch 3,
**dadurch gekennzeichnet,**
**daß** die Teilplatten (31, 36) an ihrem der Kabeldurchführung (33) zugekehrten Rand mit Abkantungen versehen sind, auf die in Breitenrichtung des Rahmengestelles verlaufende Dichtungen (33.1) aufgebracht sind.

5. Schaltschrank nach einem der Ansprüche 1 bis 4,
**dadurch gekennzeichnet,**
**daß** die Abdeckungen (30) mit einem Lochraster (32) versehen sind, durch die hindurch ein Lüftungsstrom hindurchtreten kann.

6. Schaltschrank nach einem der Ansprüche 1 bis 5,
**dadurch gekennzeichnet,**
**daß** das Innengehäuse rückseitig mittels einer Rückwand (25) verschlossen ist, die an die zugeordneten vertikalen Rahmenprofile (10) angeschraubt ist.

7. Schaltschrank nach Anspruch 6,
**dadurch gekennzeichnet,**
**daß** die Rückwand (25) mit einer Kabeldurchführung (29) versehen ist.

8. Schaltschrank nach einem der Ansprüche 1 bis 7,
**dadurch gekennzeichnet,**
**daß** die offene Frontseite des Innengehäuses mit einer Verschlußplatte (40) verschließbar ist, wobei die Verschlußplatte mit einem Ansatz (46) einer Halterung (45) in einer Hinterschneidung (35) der oberen oder unteren Abdeckung (30) eingehakt ist, und
**daß** die Verschlußplatte (40) an ihrer, der Halterung (45) abgewandten Seite mittels Schließungen (47) an dem Innengehäuse oder dem Rahmengestell verriegelbar ist.

9. Schaltschrank nach einem der Ansprüche 1 bis 8,
**dadurch gekennzeichnet,**
**daß** in den Eckbereichen des Innengehäuses vertikal verlaufende Montageschienen (12) an die vertikalen Rahmenprofile (10) angekoppelt sind.

## Claims

1. Switchgear cabinet having a framework which has four vertical frame profiles (10), with an inner housing which is arranged in the interior of the switchgear cabinet being coupled to the framework and having two vertical side walls (20) and one upper and one lower horizontal cover (30),
**characterized**
**in that** the vertical side walls (20) are attached to the vertical frame profiles (10) and are each provided with an upper and a lower longitudinal guide (24) which run in the direction of the depth of the cabinet, and
**in that** the covers (30) can be pushed into the longitudinal guides (24) across the open front face of the framework using guide elements (34) and are held on these longitudinal guides.

2. Switchgear cabinet according to Claim 1,
**characterized**
**in that** the side walls are provided with angled edge portions (22) which are directed in the direction of the interior of the framework and whose free ends are bent back in the shape of a U in order to form the longitudinal guides (24),
**in that** those horizontal edges of the covers (30) which run in the direction of the depth of the cabinet are provided with the guide elements (34) which are likewise in the form of U-shaped bent-in portions, and
**in that** the U-shaped bent-in portions of the covers (30) and of the side walls (20) are hooked into one another in the installed state.

3. Switchgear cabinet according to Claim 1 or 2,
**characterized**
**in that** at least one of the covers (30) has at least two partial plates (31, 36) which are held one behind the other in the longitudinal guides (24), and
**in that** a cable leadthrough (33) is arranged in the separating region between the two partial plates (31, 36).

4. Switchgear cabinet according to Claim 3,
**characterized**
**in that that** edge of the partial plates (31, 36) which faces the cable leadthrough (33) is provided with angled edge portions on which seals (33.1), which run in the width direction of the framework, are fitted.

5. Switchgear cabinet according to one of Claims 1 to 4,
**characterized**
**in that** the covers (30) are provided with an array of holes (32) through which a ventilating stream can pass.

6. Switchgear cabinet according to one of Claims 1 to 5,
**characterized**
**in that** the rear face of the inner housing is closed by means of a rear wall (25) which is screwed to the associated vertical frame profiles (10).

7. Switchgear cabinet according to Claim 6,
**characterized**
**in that** the rear wall (25) is provided with a cable leadthrough (29).

8. Switchgear cabinet according to one of Claims 1 to 7,
**characterized**
**in that** the open front face of the inner housing can be closed by a closure panel (40), with the closure panel being hooked into an undercut (35) in the upper or lower cover (30) by a projection (46) of a holding means (45), and
**in that** that side of the closure panel (40) which faces away from the holding means (45) can be bolted to the inner housing or the framework by means of tumbler arrangements (47).

9. Switchgear cabinet according to one of Claims 1 to 8,
**characterized**
**in that** vertical installation rails (12) are coupled to the vertical frame profiles (10) in the corner regions of the inner housing.

## Revendications

1. Armoire de distribution avec une baie, qui comprend quatre profilés verticaux (10), dans laquelle un boîtier intérieur disposé dans l'espace intérieur de l'armoire de distribution est couplé à la baie, boîtier qui comprend deux parois latérales verticales (20) et une couverture horizontale supérieure et inférieure (30), **caractérisée en ce que** les parois latérales verticales (20) sont fixées aux profilés verticaux (10) de la baie et sont respectivement pourvues d'un guide longitudinal supérieur et inférieur (24), qui sont orientés dans la direction de la profondeur de l'armoire, et **en ce que** les couvertures (30) peuvent être introduites dans les guides longitudinaux (24) avec des éléments de guidage (34) par la face frontale ouverte de la baie, et sont fixées à ceux-ci.

2. Armoire de distribution selon la revendication 1, **caractérisée en ce que** les parois latérales sont pourvues de rebords coudés (22) orientés vers l'espace intérieur de la baie, qui sont repliés en forme de U à leurs extrémités libres, afin de former les guides longitudinaux (24), **en ce que** les couvertures (30) sont pourvues, sur leurs arêtes horizontales orientées dans la direction de la profondeur de l'armoire, d'éléments de guidage (34) également pliés en forme de U, et **en ce que** les plis en forme de U des couvertures (30) et des parois latérales (20) sont accrochés les uns dans les autres à l'état monté.

3. Armoire de distribution selon la revendication 1 ou 2, **caractérisée en ce qu'**au moins une des couvertures (30) comprend au moins deux plaques partielles (31, 36), qui sont maintenues l'une derrière l'autre dans les guides longitudinaux (24), et **en ce qu'**un passage de câbles (33) est disposé dans la zone de séparation entre les deux plaques partielles (31, 36).

4. Armoire de distribution selon la revendication 3, **caractérisée en ce que** les plaques partielles (31, 36) sont pourvues, sur leur bord tourné vers le passage de câbles (33), de rebords coudés sur lesquels sont placés des joints d'étanchéité (33.1) orientés dans la direction de la largeur de la baie.

5. Armoire de distribution selon l'une quelconque des revendications 1 à 4, **caractérisée en ce que** le couvertures (30) sont pourvues d'une grille de trous (32), à travers lesquels un courant d'air de ventilation peut circuler.

6. Armoire de distribution selon l'une quelconque des revendications 1 à 5, **caractérisée en ce que** le boîtier intérieur est fermé à l'arrière par une paroi arrière (25), qui est vissée sur les profilés verticaux correspondants (10) de la baie.

7. Armoire de distribution selon la revendication 6, **caractérisée en ce que** la paroi arrière (25) est pourvue d'un passage de câbles (29).

8. Armoire de distribution selon l'une quelconque des revendications 1 à 7, **caractérisée en ce que** la face frontale ouverte du boîtier intérieur peut être fermée par une plaque de fermeture (40), dans laquelle la plaque de fermeture est accrochée avec un mentonnet (46) d'un support (45) dans une gorge (35) de la couverture supérieure ou inférieure (30), et **en ce que** la plaque de fermeture (40) peut être verrouillée au boîtier intérieur ou à la baie au moyen de fermetures (47) sur son côté situé à l'opposé du support (45).

9. Armoire de distribution selon l'une quelconque des revendications 1 à 8, **caractérisée en ce que** des rails de montage orientés verticalement (12) sont couplés aux profilés verticaux (10) de la baie dans la région des angles du boîtier intérieur.
